# EUROPÄISCHE PATENTANMELDUNG

(11) **EP 1 332 726 A1**
(43) Veröffentlichungstag der Anmeldung: **06.08.2003**
(21) Anmeldenummer: 02405979.2
(22) Anmeldetag: 13.11.2002
(51) Int. Cl.: A61C 7/12, A61C 7/14, A61C 7/28

(54) **Kieferorthopädische Apparatur zur Zahnstellungskorrektur**

(30) Priorität: 25.01.2002 WO PCT/CH02/00041
(71) Anmelder: Schaulin AG, 3008 Bern (CH)
(72) Erfinder: Schaulin, Michael, CH-3012 Bern (CH)
(74) Vertreter: Roshardt, Werner Alfred, Dipl.-Phys.

(57) **Zusammenfassung**

Die kieferorthopädische Apparatur zur Zahnstellungskorrektur hat wenigstens einem Bogendraht als Führungselement und wenigstens zwei mit dem Bogendraht verbundene Schlösser (Brackets) **(7a)**. Jedes Schloss **(7a)** hat lediglich eine auf der betreffenden Zahnoberfläche bzw. auf einem zum Zahn gehörenden Zahnband fixierbare Basiseinheit **(15)** und eine auf dem Bogendraht anbringbare Verbindungseinheit **(17)**. Die Basiseinheit ist lediglich als einfache Basisplatte **(15)** ausgebildet. Jede Verbindungseinheit **(17)** hat eine in die Basisplatte mit einer annähernd senkrecht zur Basisplattenoberseite d.h. zur die Basisplatte tragenden Zahnseite aufbringbaren Kraft ein- und ausklinkbare Klinkeinheit.

Die kieferorthopädische Apparatur ist einfach zu handhaben und herzustellen. Sie hat Eigenschaften einer festsitzenden sowie auch einer herausnehmbaren Apparatur.

## Beschreibung

### Technisches Gebiet

Die Erfindung betrifft eine kieferorthopädische Apparatur zur Zahnstellungskorrektur gemäss dem Oberbegriff des Patentanspruchs 1.

### Stand der Technik

Kieferorthopädische Apparaturen sind aus der WO 02/058584; der US-A 4,487,581; der US-A 2,908,974; der US-A 3,946,488 und der US-A 5,823,771 bekannt. Die bekannten Apparaturen sind aufwendig ausgestaltet und nur schwer im Mund des Patienten zu handhaben. Auf die speziellen Nachteile der bekannten Apparaturen wird unten bei der Darstellung der Vorteile der Erfindung eingegangen.

### Darstellung der Erfindung

### Aufgabe der Erfindung

Aufgabe der Erfindung ist es, eine kierferorthopädische Apparatur zur Zahnstellungskorrektur zu schaffen, die einerseits einfach herzustellen und einfach zu handhaben ist sowie die Eigenschaften einer festsitzenden sowie auch einer herausnehmbaren Apparatur aufweist.

### Lösung der Aufgabe

Die Aufgabe wird dadurch gelöst, dass die erfindungsgemässe kieferorthopädische Apparatur zur Zahnstellungskorrektur von Zähnen wenigstens einen Bogendraht als Führungselement und wenigstens zwei auf den Bogendraht sitzende Schlösser (Brackets) hat. Jedes Schloss hat lediglich eine auf der betreffenden Zahnoberseite bzw. eine auf einem zum Zahn gehörenden Zahnband, fixierbare Basiseinheit und eine auf dem Bogendraht anbringbare Verbindungseinheit mit einer Klinkeinheit. D.h. es sind lediglich zwei Hauptelemente (eventuell verwendbare Hilfselemente wie Gummiband und Ligaturendraht ausgenommen) pro Schloss vorhanden.

Die Basiseinheit ist zudem lediglich als einfache Platte, als Basisplatte ausgebildet, welche keine Aufbauten, wie beispielsweise in der US-A 5,823,771 und der USA 3,946,488 beschrieben aufweist. Die Basiseinheit trägt höchstens wie unten erwähnt Ösen für eine Ligatur oder ein Gummiband. Es handelt sich bei der Basiseinheit der Erfindung um ein Element, welches als Platte auf der Zahnseitenfläche bzw. auf einem Zahnband fixierbar ist. Aufgrund der plattenartigen Ausbildung ist die Basisplatte einfach herzustellen. Sie kann z.B. aus Blech gebogen werden. Abgesehen von fakultativ anzubringenden Ösen für eine Ligatur, ein Gummiband etc. hat die Basisplatte keine vorstehenden Elemente wie Federn oder Klammern. Die Verbindungseinheit ist in die Basisplatte ein- und ausklinkbar. Bei ausgeklinkter Verbindungseinheit befinden sich nur die Basisplatten auf den Zahnseitenflächen, welche nahezu keine die Zunge oder Backe störende hervorstehende Elemente aufweisen. Die Zunge bzw. die Backeninnenseite stark störende Elemente an Basiseinheiten, werden jedoch beim Stand der Technik verwendet: federnde Seitenwände (dort mit 3.1, 3.2, 75.1, 75.2 bezeichnet) einer Basiseinheit der WO 02/058584, die ebenfalls federnden Seitenwände (dort mit "walls 34" bezeichnet) in der US-A 2,908,974, die vorstehenden Haken (dort mit "tabs 20" bezeichnet) der US-A 3'946,488 und die federnden vorstehenden Klammern (dort mit "tab 33, 34" bezeichnet) der US-A 4,487,581.

Da die auf der Zahnoberfläche bzw. die am Zahnband anzubringende Einheit als Basisplatte ausgebildet ist, ist sie einfach zu befestigen. Sie hat im Gegensatz zum Stand der Technik, da sie lediglich als eine Platte ausgebildet ist, keine auftragenden Zusatzelemente, wie Klammern, Federelemente; auch ist sie nicht auftragend und voluminös, wie beispielsweise in der US-A 5,823,771 ausgestaltet. Zudem ist die Basisplatte bedeutend preisgünstiger herstellbar als die bekannten, oben genannten Basiseinheiten.

Die Basisplatte hat typische Abmessungen von etwa 5 mm Länge und gut 4 mm Breite bei einer Höhe von etwa 1 mm. Die Verbindungseinheit hat typischerweise eine Breite und Länge von 3 mm sowie eine Höhe von knapp 2 mm.

Die Klinkeinheiten dienen dazu die Verbindungseinheit in die Basisplatte für laufende Zahnstellungskorrekturen ein- und ausklinken zu können. Die Verbindungseinheit ist mit ihren Klinkeinheiten einfach auf der Basisplatte ein- und ausklinkbar. Die erfindungsgemässe kieferorthopädische Apparatur hat somit Eigenschaften einer festsitzenden sowie auch einer herausnehmbaren Apparatur.

Jede Verbindungseinheit hat eine in die Basisplatte mit einer annähernd senkrecht zur Basisplattenoberseite d.h. zur die Basisplatte tragenden Zahnseiten aufbringbaren Kraft ein- und ausklinkbare Klinkeinheit. Ein senkrechtes Ein- und Ausklinken einer Verbindungseinheit in eine Basiseinheit ist zwar auch in der WO 02/058584; der US-A 4,487,781 und der US-A 2,908,974 möglich; es wurden hierbei jedoch Basiseinheiten mit stark störenden hervorstehenden Elementen verwendet. Um diese vorstehenden Elemente an der Basiseinheit zu eliminieren, wurden dann in der US-A 3,946,488 und der US-A 5,823,771 Schlosskonstruktionen gewählt, bei denen die Verbindungseinheit auf die Basiseinheit geschoben wurde, wobei die Schiebebewegung parallel zur Zahnseitenfläche zu erfolgen hatte. Eine derartige Schiebebewegung ist bedeutend schwerer im Mund des Patienten vorzunehmen als die annähernd senkrechte Bewegungsrichtung beim Erfindungsgegenstand.

Unter einer annähernd senkrechten, zur Basisplattenoberseite aufbringbaren Kraft wird bei der Erfindung eine Kraft verstanden, deren senkrechte Wirkung optimal ist, aber auch Abweichungen von der Senkrechten zulässt, da oftmals bei auf der Zahlseite angebrachten Basisplatten eine exakt senkrechte Einwirkung nicht immer möglich ist. Vereinfacht ausgedrückt: Es wird dagegen gedrückt und nicht geschoben.

Basisplatte und Verbindungseinheit haben vorzugsweise zueinander passende Rast- und Gegenrastelemente als Klinkeinheit. Es könnte zwar auch geschraubt werden; dies ist aber schlechter zu handhaben. Die Rast- und Gegenrastelemente sind derart ausgebildet, dass ein rastender Eingriff in die Basisplatte erfolgt; d.h. es erfolgt vorzugsweise ein Eingriff in Öffnungen der Basisplatte oder an deren Rand bzw. Rändern. Der Eingriff kann nun derart erfolgen, dass das Rastelement durch die Basisplatte hindurchgreift oder in der Öffnung bzw. am Rand der Basisplatte oder an Strukturen im Öffnungsrand eingreift. Im letzteren Ausführungsbeispiel kann die Basisplatte sehr flach ausgebildet werden, da kein Freiraum für die Rastelemente nach dem Durchstecken erforderlich ist.

Die Basisplatte sollte wenigstens eine Auflagefläche für eine Fixierung an der betreffenden Zahnoberfläche bzw. am zum Zahn gehörenden Zahnband und vorzugsweise wenigstens eine Abstandswölbung haben. Bei einer derartigen Ausgestaltung ergibt sich ein Freiraum zur Zahnoberfläche bzw. zur Zahnbandaussenseite. In diesen Freiraum können je nach gewählten Klinkeinheiten, die Rast- bzw. Gegenrastelemente eindringen. Die Basisplatte kann nun lediglich eine auf der Zahnoberfläche bzw. auf dem Zahnband zu befestigende (aufzuklebende bzw. aufzuzementierende) Auflagefläche haben, wobei dann die an die Auflagefläche anschliessenden seitlichen Flächen leicht nach oben gezogen sind, damit sich hier zwei Freiräume links und rechts bilden. Die Basisplatte kann aber auch derart geformt sein, dass zwei Auflageflächen vorhanden sind, welche durch einen Bereich getrennt sind, in dem die Basisplatte derart nach aussen gewölbt ist, dass sich in der Mitte ein Freiraum ergibt. Dieser Freiraum erleichtert bzw. diese Freiräume erleichtern das spätere Entfernen der Basisplatte von der Zahnoberfläche bzw. vom Zahnband, da mit einem entsprechenden Werkzeug eingegriffen werden kann. Auch wird durch den Freiraum bzw. die Freiräume die Haltekraft erhöht, da Klebemittel bzw. Zement an der Übergangsfläche leicht empor steigt.

Um die Basisplatte einfach und kostengünstig mit einer guten mechanischen Funktionalität auszugestalten, werden vorzugsweise im Bereich des Freiraums bzw. der Freiräume wenigstens ein oder auch zwei voneinander distanzierte erste Durchbrüche angeordnet, wobei wenigstens einer der Durchbruchränder als Einklinkkante wirkt. Die Verbindungseinheit hat dann hierzu passende klinkenartige Elemente, aufgrund deren Vorhandensein eine lösbare Verbindung der Verbindungseinheit von der Basisplatte möglich ist.

Die Klinkeinheiten können auf unterschiedliche Art und Weise ausgebildet sein. Jede Verbindungseinheit hat wenigstens zwei einander gegenüberliegende Klinkelemente, welche federnd ausgebildet und somit in entsprechende Gegenelemente (Einklinkkanten) in der Basisplatte einklinkbar sind. Vorzugsweise können die Klinkeinheiten auch paarig mit einer Federwirkung gegeneinander ausgebildet sein, wodurch sich die Haltekraft erhöht.

Die Verbindungseinheit hat vorzugsweise wenigstens eine Einlegausnehmung, durch die der Bogendraht führbar oder in den er einlegbar ist. Es können selbstverständlich auch mehrere Durchbrüche für mehrere Bogendrähte oder für eine grössere Lageauswahl auf den Zahn vorhanden sein. Es kann dann eine schräge Führung des Bogendrahtes in der Verbindungseinheit erfolgen.

Die Klinkeinheit, welche zum Einklinken in die Basisplatte dient, und ein Grundkörper der Verbindungseinheit, der in Wesentlichen zur Halterung des Bogendrahtes dient, können zwei- und mehrteilig ausgebildet werden. Bei einer mehrteiligen Ausbildung kann eine Oberfläche oder eine Abdeckung vorgesehen werden, welche einfärbbar ist. Als Farbe kann entweder die Zahnfarbe benachbarter Zähne oder eine beispielsweise poppige Farbe gewählt werden. Klinkeneinheit und Grundkörper können jedoch auch ein einziges zusammenhängendes, nicht auftrennbares Teil bilden. Dies hat den Vorteil einer leichteren und schnelleren Montage. Auch können sich keine Essensreste zwischen den Teilen ablagern.

Vorzugsweise hat jede Verbindungseinheit einen ersten Schlitz der jeden Durchbruch mit dem die klinkenartigen Elemente schlitzenden zweiten Schlitz verbindet, damit die Federwirkung dazu verwendbar ist, den im zweiten Durchbruch steckenden Bogendraht zu klemmen.

Die Verbindungseinheit kann klotzartig ausgebildet werden. Vorzugsweise wird man sie aber U-förmig ausbilden, wobei die Klinkeinheiten Teil der U-Schenkel sein können und jeder Durchbruch je eine Öffnung in einem der Schenkel hat, und in der Schenkelbasis in unmittelbarer Nachbarschaft der Öffnungen Eingriffsdurchbrüche vorhanden sind, durch die hindurch der Bogendraht beim Klemmen fixierbar ist. Vorzugsweise wird man die Öffnungen in den Schenkeln fluchtend zueinander anbringen.

Die Verklinkung zwischen Verbindungseinheit und Basisplatte muss kräftig, mit einer grossen Federkraft ausgebildet werden, um eine ungewollte Lösung der Verbindung durch den Kaudruck zu vermeiden. Die Federkraft muss vom Zahnarzt beim Einklinken bzw. beim Ausklinken überwunden werden. Um eine Reduzierung der Federkraft zu erreichen, kann die Verklinkung mit einer schwächeren Federkraft ausgeführt werden, wenn zusätzlich zwischen Verbindungseinheit und Basisplatte eine Steckverbindung ausgebildet wird. Diese Steckverbindung nimmt dann die Kaukräfte auf und die Verklinkung muss nur noch die in der Regel annähernd senkrecht zur Kaukraft wirkenden, bedeutend geringeren Haltekräfte aufnehmen.

Auch kann die Verbindungseinheit an zwei gegenüberliegenden Seiten wenigstens je eine vorstehende Lasche haben, an der der Bogendraht direkt befestigbar oder der Bogendraht mit einem Gummiband oder eine Ligatur befestigbar ist. Bei einer direkten Befestigung kann beispielsweise mit einem Laser geschweisst werden.

Die Verbindungseinheit kann bis auf die Durchbrüche für jeden Bogendraht und die Elemente zum Ein- bzw. Ausklinken in der Basisplatte vergossen sein. Als Vergussmittel können Kunststoff und Keramiken verwendet werden, welche vorzugsweise im Mund des Patienten zeitlich oder unter Verwendung von uv-Strahlung aushärten. Bei aufbringen der Vergussmasse ist darauf zu achten, dass die Klinkeinheiten und deren Federeigenschaften nicht wesentlich beeinträchtigt werden.

### Kurze Beschreibung der Zeichnungen

Im Folgenden werden Beispiele der erfindungsgemässen kieferorthopädischen Apparatur sowie der hierin verwendeten Schlösser [Brackets] anhand der nachfolgenden Zeichnungen näher erläutert. Weitere Vorteile der Erfindung ergeben sich aus dem Beschreibungstext. Es zeigen:
- Fig. 1: eine Draufsicht auf einen Kiefer mit eingesetzter kieferorthopädischer Apparatur,
- Fig. 2: eine perspektivische Darstellung eines Schlosses (Bracket) der in **Figur 1** dargestellten kieferorthopädischen Apparatur,
- Fig. 3: eine perspektivische Darstellung einer Basisplatte des in **Figur 2** dargestellten Schlosses,
- Fig. 4: eine perspektivische Darstellung einer Verbindungseinheit des in **Figur 2** dargestellten Schlosses,
- Fig. 5: eine Seitenansicht der in den **Figuren 2** und **3** dargestellten Basisplatte in Blickrichtung V in **Figur 2**, wobei die hier angegebene Vermassung lediglich beispielshaft ist, aber dennoch einen Eindruck der typischen Grössenordnung vermitteln soll,
- Fig. 6: einen Querschnitt durch eine Variante zu dem in **Figur 2** gezeigten Schloss,
- Fig. 7: eine Draufsicht auf die in **Figur 6** gezeigte Variante,
- Fig. 8: eine Draufsicht auf einen Zahn mit einem an einem Zahnband befestigten Schloss,
- Fig. 9: eine schematische Darstellung des Befestigungsvorganges der Basisplatte an der Zahnoberfläche,
- Fig. 10: eine perspektivische Darstellung einer Variante einer Verbindungseinheit,
- Fig. 11: eine perspektivische Darstellung einer weiteren Variante einer Verbindungseinheit,
- Fig. 12: eine perspektivische Darstellung einer zusammen mit den in den **Figuren 10** und **11** dargestellten Verbindungseinheiten verwendbaren Basisplatte,
- Fig. 13: eine perspektivische Darstellung einer Basisplatte, welche bevorzugt auf einem Zahnband befestigbar ist,
- Fig. 14: einen Querschnitt durch eine weitere Variante eines Schlosses,
- Fig. 15: eine perspektivische Darstellung einer Variante eine Verbindungseinheit mit Lagefixierung,
- Fig. 16: eine perspektivische Darstellung einer Variante zu der in **Figur 15** gezeigten Verbindungseinheit,
- Fig. 17: eine kieferorthopädische Anordnung im Unterkiefer mit zwei Schlössern und einem Aufbiss und
- Fig. 18: eine weitere kieferorthopädische Anordnung im Oberkiefer mit zwei Aufbissen, wobei die Aufbisse mit jeweils einem Bogendraht an einem Schloss an je einem Molar befestigt sind und die beiden Schlösser untereinander durch einen Palantinalbogen verbunden sind.

### Wege zur Ausführung der Erfindung

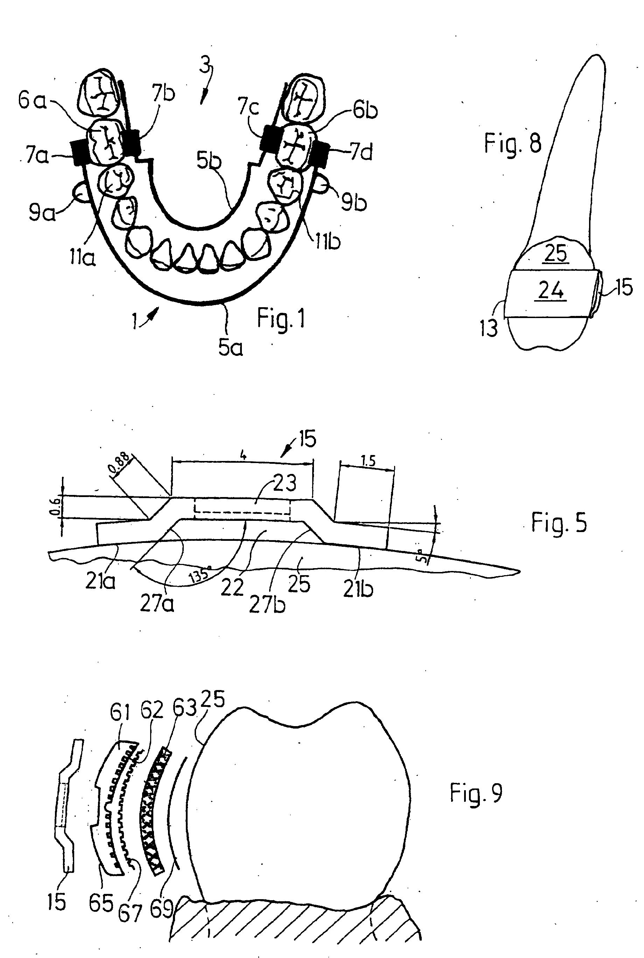

**Figur 1** zeigt ein Anwendungsbeispiel der erfindungsgemässen kieferorthopädischen Apparaturen **1a** und **1b** in einer Kombination verschiedener Korrekturhilfen in einer Draufsicht auf einen Unterkiefer **3.** Jede kieferorthopädische Apparatur **1a** und **1b** hat einen Bogendraht **5a** bzw. **5b** als Führungselement und jeweils zwei mit dem Bogendraht **5a** bzw. **5b** verbundene Schlösser (Brackets) **7a** und **7b** bzw. **7c** und **7d.** Die Schlösser **7a** und **7b** sind am Molar (Mahlzahn) **6a** und die Schlösser **7c** und **7d** am Molar **6b** lingual (der Zunge zugewandt) bzw. buccal (der Wange zugewandt) unter Verwendung adhäsiver Mittel befestigt. Die Schlösser **7a** und **7d** halten den Bogendraht **5a** und die Schlösser **7b** und **7c** den Bogendraht **5b** als sog. Labialbogen. Am Bogendraht **5a** sind zwei Aufbisse **9a** und **9b** seitlich zu den Molaren **6a** und **6b** vorgelagerten Molaren **11a** und **11b** angeordnet. An den lingual angeordneten Schlössern **7b** und **7c** ist der Bogendraht **5b** als Lingualbogen befestigt.

Die kieferorthopädischen Apparaturen können auch am Oberkiefer angeordnet werden, wobei hier beispielsweise der Bodendraht als Palatinalbogen augebildet ist. Die Lage der Bogendrähte kann analog zu denjenigen in der WO 02/058584 beschriebenen sein. Die Aufbisse können mannigfalltig ausgebildet sein und können durch den Zahnarzt im Mund des Patienten angepasst und von ihm selbst in der Zahnarztpraxis beispielsweise durch Lichtpolymerisation gehärtet werden. Anschliessend werden die Aufbisse mit den Schlössern der entsprechenden kieferorthopädischen Apparate eingeschnappt und somit gehalten. Der Zahnarzt kann direkt die Passform des Korrekturmittels kontrollieren und gegebenenfalls selbst noch leichte Anpassungen vornehmen.

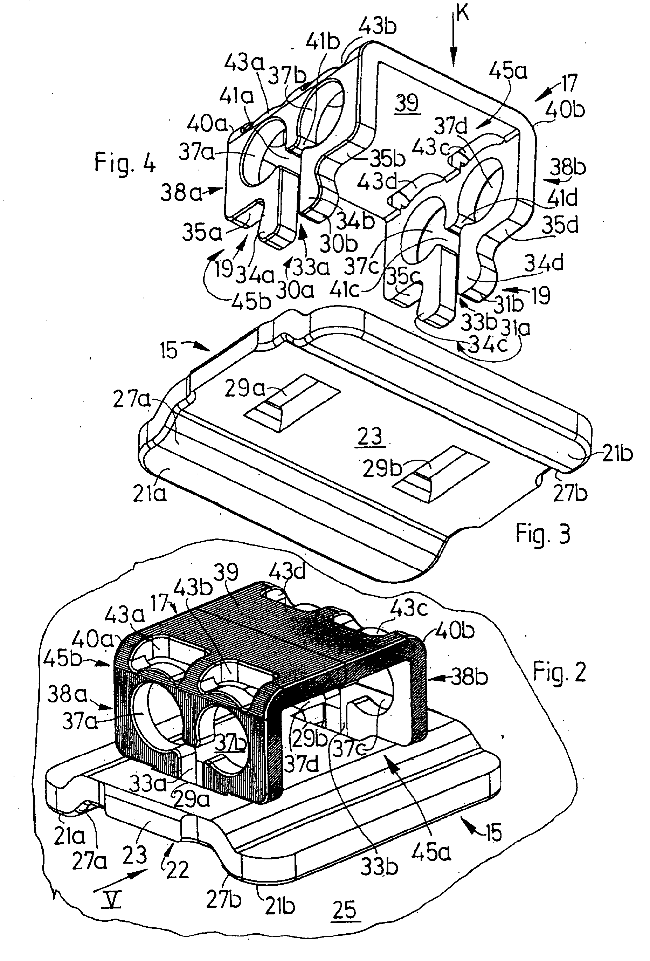

Ein Schloss **7** analog der obigen Schlösser **7a** bis **7d** ist perspektivisch in **Figur 2** dargestellt. Das Schloss **7** hat lediglich eine auf dem betreffenden Zahn (Zahnoberfläche **25**) (z.B. Molar **6a,b, 11a,b** oder sonstiger Zahn des Gebisses) bzw. auf einem zum Zahn gehörenden Zahnband **13** insbesondere mit adhäsiven Mitteln fixierbare Basisplatte **15** und eine auf dem Bogendraht **5a** bzw. **5b** anbringbare Verbindungseinheit **17** mit einer Klinkeinheit **19**, um die Verbindungseinheit **17** in die Basisplatte **15** mit einer annähernd senkrecht zur Oberfläche der Basisplatte **15** wirkenden Kraft K einklinken zu können. Die eingeklinkte Verbindungseinheit **17** ist, wie unten beschrieben, wieder ausklinkbar. Die Klinkeinheit **19** und die Verbindungseinheit **17** bilden ein einziges Teil.

Die Basisplatte **15** und die Verbindungseinheit **17** haben zueinander passende Rast und Gegenrastelemente als Klinkeinheit **19**, wobei ein rastender Eingriff in der Basisplatte **15**, wie in **Figur 2** gezeigt, erfolgt. Die Basisplatte **15** hat wenigstens eine Auflagefläche **21a/b** für eine Fixierung an der betreffenden Zahnoberfläche **25** bzw. am zum Zahn gehörenden Zahnband **13** und wenigstens eine Abstandswölbung **23**, welche bei auf der Zahnoberfläche **25** bzw. auf einem zum Zahn gehörenden Zahnband **13** befestigten Basisplatte **15** einen Freiraum **22** zur Zahnoberfläche **25** bzw. zur Zahnbandaussenseite **24** freilässt. Der Freiraum **22** dient u.a. als Entfernungshilfe zum Entfernen der Basisplatte **15** vom Zahn, z. B. mit einer Zange, Pinzette oder einem anderen geeigneten Hilfsmittel.

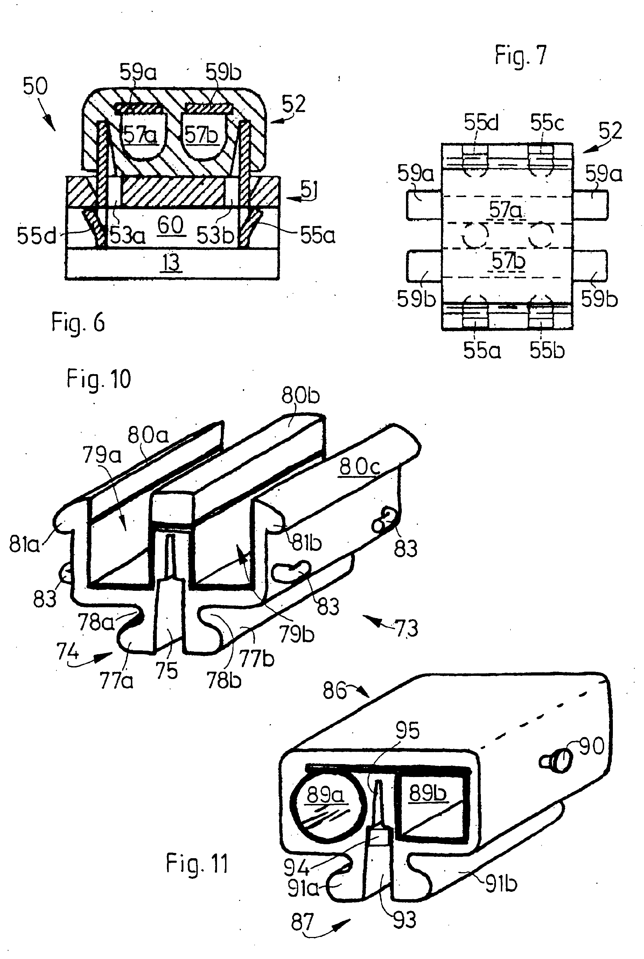

In dem in den **Figuren 2** bis **4** gezeigten Ausführungsbeispiel sind neben dem Freiraum **22** bzw. der Abstandswölbung **23** zwei Auflageflächen **21a** und **21b** vorhanden. Die Abstandswölbung **23** ist, wie insbesondere in **Figur 5** ersichtlich, eben ausgebildet und geht mit zwei Schrägen **27a** und **27b** in die Auflageflächen **21a** und **21b** über. Die Auflageflächen sind gegenüber der ebenen Abstandswölbung entsprechend der Kontur der Zahnoberfläche geneigt ausgebildet. Die Neigung richtet sich nach den Abmessungen der Basisplatte **15** bezüglich ausgewähltem Befestigungszahn und beträgt bei einer **7** mm breiten Basisplatte **15** etwa 5°. Die Basisplatte **15** hat im Bereich des Freiraums **22** bzw. ihrer Abstandswölbung **23** wenigstens zwei voneinander distanzierte Einklinkdurchbrüche **29a** und **29b** ausgebildete Einklinkausnehmungen. Die beiden einander gegenüberliegenden Längsränder in den Einklinkdurchbrüchen **29a** bzw. **29b** wirken als Einklinkkanten. Die Verbindungseinheit **17** hat hierzu passende klinkenartige Elemente **30a** und **30b** sowie **31a** und **31b** als Klinkeinheit **19**. Die klinkenartigen Elemente **30a/b** und **31a/b** sowie die Durchbrüche **29a** und **29b** dienen als wieder lösbare Verbindung für die Verbindungseinheit **17** mit der Basisplatte **15.** Die Elemente **30a/b** und **31a/b** sind durch je einen Schlitz **33a** bzw. **33b** voneinander getrennt. Durch diese Schlitzung sind die.beiden paarig ausgebildeten Elemente **30a/b** bzw. **31a/b** federnd. Ferner haben die Elemente **30a/b** und **31a/b** je einen vom Schlitz **33a** bzw. **33b** wegzeigenden Ansatz **34a** bis **34d.** An die Elemente **30a/b** und **31a/b** schliesst links und rechts je eine Auflagekante **35a** bis **35d** an, bis zu der die Verbindungseinheit **17** in die Basisplatte **15** eingedrückt werden kann. Ist die Basisplatte **15** eingedrückt, so liegen die klinkenartigen Elemente **30a/b** und **31a/b** an der Unterseite der Abstandswölbung **23** im Freiraum **22**. Die Verbindungseinheit **17** ist in die Basisplatte **15** fest eingeklickt und da die Basisplatte **15** fest mit dem Zahn verbunden ist, ist auch die Verbindungseinheit **17** fest mit dem Zahn verbunden.

Die Verbindungseinheit **17** hat wenigstens einen Durchbruch, hier zwei Durchbrüche mit je zwei Öffnungen **37a** bis **37d**, als Einlegausnehmung für den Bogendraht. Die Verbindungseinheit **17** ist U-förmig ausgebildet. In jedem der U-Schenkel **38a** und **38b,** an deren Enden auch die klinkenartigen Elemente **30a/b** bzw. **31a/b** angeordnet sind, liegen die jeweils beiden Öffnungen **37a/b** und **37c/d** benachbart und im gleichen Abstand zum U-Boden **39.** Der U-Boden **39** ist eben und geht mit einer Rundung **40a** und **40b** in die Schenkel **38a** und **38b** über.

Benachbarte Öffnung **37a** und **37b** bzw. **37c** und **37d** sind jeweils mit einem Schlitz **41a** bis **41d** mit dem betreffenden Schlitz **33a** bzw. **33b** verbunden. Die Schlitze **33a, 33b** und **41a** bis **41d** bestimmen die Federwirkung der Klinkeinheit **19.** Die Schlitze **33a, 33b** und **41a** bis **41d** können jedoch auch mit dem Durchmesser der Öffnungen **37a** bis **37d** und dem Durchmesser des in die Öffnungen **37a** bis **37d** einzubringenden Bogendrahtes **5a** und **5b** derart abgestimmt werden, dass bei eingeklinkter Klinkeinheit **19** eine Klemmung des Bogendrahts **5a** bzw. **5b** erfolgt.

Im U-Boden **39** können in unmittelbarer Nachbarschaft der Öffnungen **37a** bis **37d** Eingriffsdurchbrüche **43a** bis **43d** vorhanden sein, durch die hindurch der Bogendraht 5a bzw. 5b beim oben genannten Klemmen fixierbar ist.

Die Oberfläche der Verbindungseinheit **17** sowie auch der Basisplatte **15** kann insbesondere aus ästhetischen Gründen beschichtet sein. Die Beschichtung kann ein Kunststoff oder auch ein sonstiger metallischer (ev. goldfarbener) Überzug sein. Es kann aber auch die gesamte Verbindungseinheit **17** aufgegossen werden, wobei dann die Öffnungen **37a** bis **37d**, die Eingriffsdurchbrüche **43a** bis **43d** und die seitlichen Öffnungen **45a** und **45b** das Ausgiessen und falls notwendig den Aushärtevorgang erleichtern.

Die Ansätze **34a** bis **34d** können in einer Abwandlung zu der in **Figur 4** dargestellten Konstruktion, bei der sie seitlich ausgebuchtet sind, auch derart ausgebildet werden, dass sie nach vorn und nach hinten, also parallel zur Achse des einzuführenden Bogendrahtes bzw. der einzuführenden Bogendrähte nach aussen ausgebuchtet sind. Die Ausbuchtung der Ansätze kann jedoch auch in einer Schwenkung um 180° vorgenommen werden, so dass sie in das Innere der Verbindungseinheit **17** zeigen.

In den **Figuren 2** und 4 ist die Verbindungseinheit **17** U-förmig mit offenen Seiten **45a** und **45b** konstruiert. Diese offenen Seiten **45a** und **45b** können jedoch auch verschlossen werden. Ein Verschliessen ist z. B. mit Seitenblechen möglich. Wobei, um die federnde Wirkung der U-Schenkel zu erhalten, die Seitenbleche geschlitzt sein können.

Die Abstandswölbung muss nicht eben sein, sie kann auch beliebig gewölbt sein. Die Auflagekanten **35a** bis **35d** der Verbindungseinheit sind dann entsprechend anzupassen. Es müssen auch nicht nur zwei Durchbrüche **29a** und **29b** vorhanden sein; es können mehrere z.B. drei, vier usw. vorhanden sein. Eine ungerade Anzahl ist dann von Vorteil, wenn die Verbindungseinheit **17** derart ausgebildet ist, dass sich die Seiten unterscheiden und eine vorgegebene Einbaulage immer gegeben sein soll.

In **Figur 6** ist im Querschnitt eine Variante eines Schlosses **50** zu dem in **Figur 2** gezeigten Schloss **7a** zu sehen. Die Basisplatte **51** ist analog zur Basisplatte **15** in ihrer Aussenkontur geformt. Zu den Einklinkdurchbrüchen **29a** und **29b** analoge Einklinkdurchbrüche **53a** und **53b** als Einklinkausnehmungen befinden sind hier in einer um 90° gedrehten Position, d.h. an der Längsseite einer Verbindungseinheit **52.** Auch sind Elemente zum Einklinken einfacher als die Elemente **30a/b** bzw. **31a/b** ausgebildet. Es sind hier lediglich nach aussen gebogene Laschenelemente **55a** bis **55d** vorhanden. Um ein einfaches Verbinden mit dem Bogendraht zu erreichen, ist oberhalb der Durchbrüche **57a** und **57b** je eine vorzugsweise durchgehende überstehende Lasche **59a** und **59b** vorhanden. Auch hier ist ein zum Freiraum **22** analoger Freiraum **60** vorhanden. Ein Freiraum **60** analog zum Freiraum **22** ist ebenfalls vorhanden.

Anstatt ausgestanzte Laschenelemente zu biegen, kann auch das gesamte Laschenende nach aussen bzw. nach innen gebogen werden.

Ein Beispiel eines an einem Zahnband **13** fixierten Schlosses **7a** zeigt **Figur 8.** Als Zahn ist hier beispielsweise ein Eckzahn gewählt.

**Figur 9** zeigt einen Aufbau einer Klebeverbindung zwischen einer direkt an der Zahnoberfläche **25** Basisplatte **15** (mit der Basisplatte **51** würde analog verfahren). Die Basisplatte **15** bzw. **51** ist vorzugsweise aus rostfreiem, bioverträglichem Stahl oder aus einem anderen geeigneten Material hergestellt. Die Kontaktfläche der Basisplatte **15** zur Zahnoberfläche **25** ist vorbehandelt, z. B. sandgestrahlt oder geätzt (Aluoxid). Zwischen der Basisplatte **15** und der Zahnoberseite **25** ist eine Klebebasis **61** mit einer Kontaktfläche **62** und einer Ausgleichsschicht **63** vorhanden. Die Wirkung einer Matrize/Patrize-Verbindung zwischen der Basisplatte **15** und der Klebebasis **61** gewährleistet eine gewisse Anpassungsfähigkeit der Basisplatte **15** und verhindert, dass unerwünschte Klebematerialreste bzw. Kleberüberschuss in die Basisplatte **15** eindringen. Da der Zahn im Wesentlichen konvexe Oberflächen an seinen Seiten aufweist, wird mit wenig Klebematerial der nötige Ausgleich zwischen der Zahnoberfläche **25** und der Kontaktfläche **62** geschaffen. Zur Vereinfachung der Herstellung der Klebebasis **61** und im Hinblick auf einen minimalen Materialverbrauch ist die gesamte Klebebasis **61** leicht gebogen, so dass die Kontaktfläche **62** konvex und die gegenüberliegende Fläche **65** konkav ist. Jede Zahnoberfläche **25** hat eine individuelle Raumform, weshalb die rein konkave Ausgestaltung der Kontaktfläche **62** der Klebebasis **61** nur bedingt die Erfordernisse an einen sparsamen und optimalen Materialverbrauch erfüllt. Zum Ausgleich allfälliger Unebenheiten ist zusätzlich eine anpassbare Ausgleichsschicht **63** vorgesehen. Die Ausgleichsschicht **63** ist aus einem verformbaren, lichthärtenden Kunststoff hergestellt und einseitig mit der Kontaktfläche **62** der Klebebasis **61** verbunden bzw. verklebt. Zur Verbesserung dieser geklebten Verbindung zwischen zumeist zwei unterschiedlichen Materialien kann ein dünner oder dünnflüssiger Metall-Kunststoff Primerfilm **67** auf die zu verbindenden Flächen aufgebracht werden. Die anpassbare Ausgleichsschicht **63** weist im Grundriss bevorzugt die gleichen Abmessungen wie die Kontaktfläche **62** der Klebebasis **61** auf. Somit fällt kaum überschüssiges Material an, das System ist einfacher handhabbar und ergibt eine grosse Zeitersparnis. Die Stärke der anpassbaren Ausgleichsschicht **63** ist derart gewählt, dass die gleiche Stärke der Ausgleichsschicht **63** bei unterschiedlich grossen Zähnen die Differenz zwischen der Kontaktfläche **62** der Klebebasis **61** und der Zahnoberfläche 25 ausgleicht und beim Kleben und Anpassen der Basisplatte **15** diese Differenz mit etwas Druck ausgeglichen sowie die Basisplatte **15** ausgerichtet werden kann. Die Zahnoberfläche **25** wird bevorzugt vor dem Befestigen der Baisiplatte **25** vorbehandelt (angeätzt, sand-, oxid- oder salzgestrahlt). Damit wird eine poröse Zahnoberfläche **25** geschaffen, an welcher der Kleber **69** besser haftet. Der Kleber **69** ist z. B. eine dünne Lack- oder Klebeschicht, die vor dem definitiven Versetzen der Basisplatte **15** auf die Zahnoberfläche **25** und auf die der Oberfläche 25 zugewandten Fläche der anpassbaren Ausgleichsschicht **63** aufgebracht wird, beispielsweise aufgepinselt wird. Anschliessend wird die Basisplatte **15** mit der bereits angebrachten Klebebasis **61** und Ausgleichsschicht **63** durch leichtes Pressen gegen die Zahnoberfläche **25** angepasst, beispielsweise durch Lichtpolymerisation befestigt, wobei mehrere, einzeln vorhandene, lichthärtende Komponenten unter Umständen gleichzeitig ausgehärtet werden. Um den Abstand der Baisplatte 15 zur Incisialkante des Zahns möglichst gleichmässig zu halten und die Basisplatte **15** während der Positionierung nicht mit den Fingern halten zu müssen, kann ein - hier nicht dargestellter - Klebedistanzhalter beziehungsweise eine Positionierhilfe verwendet werden.

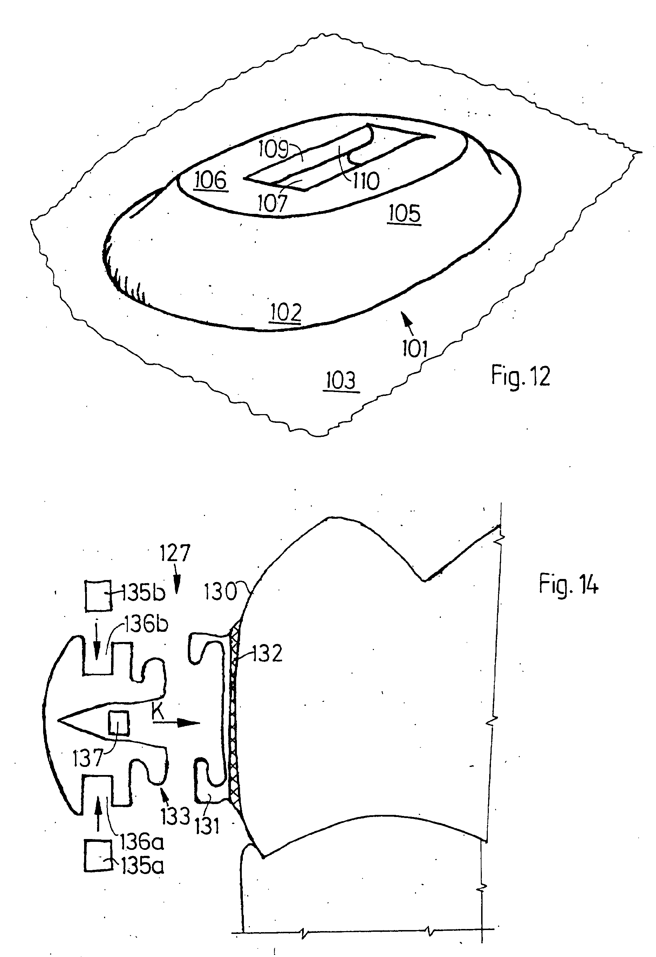

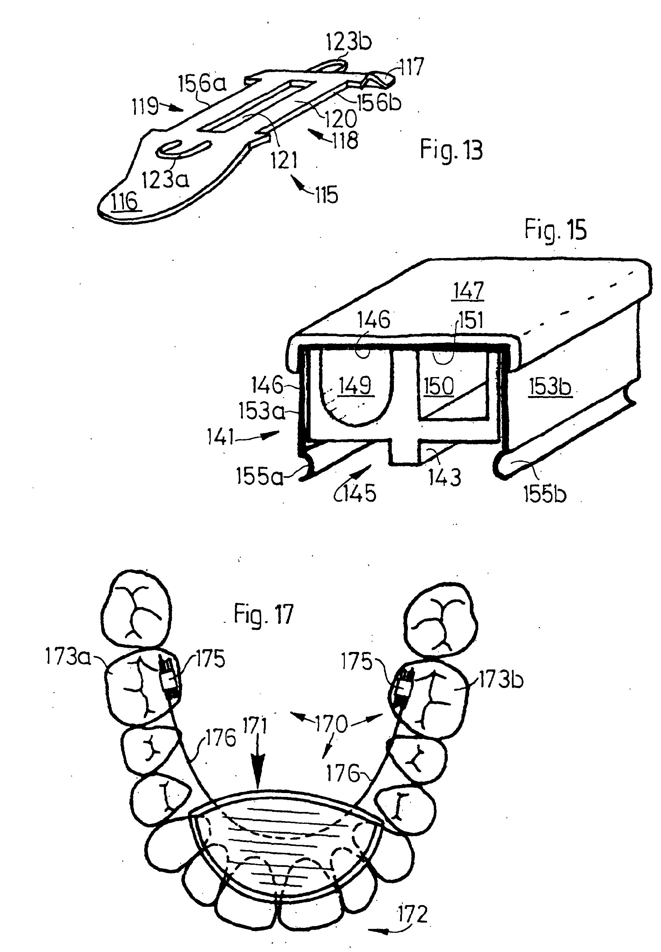

Die in **Figur 10** in perspektivischer Darstellung gezeigte Verbindungseinheit **73** als Variante zu den in den **Figuren 2, 4, 6** und **7** gezeigten Verbindungseinheiten **17** und **52** hat eine schienenartig ausgebildete Klinkeinheit **74**. Die Klinkeinheit **74** kann in eine in **Figur 12** oder **13** dargestellte Basisplatte **101** eingeklinkt werden. Diese Basisplatte **101** kann analog zur Basisplatte **15** ausgebildet sein, wobei hier nicht die beiden Einklinkdurchbrüche **29a** und **29b** vorhanden sind, sondern ein einziger zu diesen beiden gedachten Einklinkdurchbrüchen **29a** und **29b** senkrechte verlaufender Einklinkdurchbruch, der etwa in der Mitte einer Abstandswölbung (analog zur Abstandswölbung **23**) verläuft. Die Klinkeneinheit **74** hat ein durch einen Längsschlitz **75** geteiltes Klinkenelementenpaar mit zwei sich seitlich erstreckenden schienenartigen Wülsten **77a** und **77b,** welche mit einer jeweils anschliessenden Rille **78a** bzw. **78b** in den restlichen Teil der Verbindungseinheit **73** übergeht. Aufgrund der schienenartigen Ausbildung ist die Haltefähigkeit der Verbindungseinheit **74** in der nicht dargestellten Basisplatte bedeutend besser als bei den Verbindungseinheiten **17** und **52**. Der Wulst **77a** und die Rille **78a** sind spiegelbildlich zum Wulst **77b** und der Rille **78b** ausgebildet (analoges gilt für den unten erwähnten Fräsrand **109** der Einklinkausnehmung **107** der in **Figur 12** dargestellten Basisplatte **101**), wenn keine Einsetzlage vorgegeben ist. Soll eine Einsetzlage vorgegeben werden, erfolgt eine unterschiedliche Ausbildung.

Die Einlegausnehmungen für hier beispielsweise zwei Bogendrähte sind als im Querschnitt rechteckige, nach aussen offene Einlegrillen **79a** und **79b** ausgebildet. Die längsverlaufenden Einlegrillenränder **80a** bis **80c** sind derart leicht gewölbt ausgebildet, dass eine Abdeckung mit einer nicht dargestellten Haube möglich ist. Die Haube soll Verletzungen oder Irritationen an Backe oder Zunge vermeiden und je nach gewählter Haubenart und -farbe ein ästhetisches schönes Aussehen erzeugen. Die beiden seitlichen Einlegrillenränder **80a** und **80c** habe eine überstehende Nase **81a** bzw. **81b,** in die eine entsprechende (nicht dargestellte) Klammer als Haube einschiebbar bzw. einklinkbar ist.

Die Verbindungseinheit **73** hat ferner vier Haken **83,** von denen in **Figur 10** jedoch nur drei sichtbar sind. An den Haken **83** können Ligaturen, Gummibänder etc. befestigt werden. Anstelle der Haken **83** können Knöpfe verwendet werden. Anstelle von vier Haken oder Knöpfen kann auch nur je ein Knopf bzw. Haken in der Längsseitenmitte angeordnet werden.

Die in **Figur 11** dargestellte Variante einer Verbindungseinheit **86** hat eine zur Klinkeinheit **74** der Verbindungseinheit **73** analog ausgebildete Klinkeinheit **87.** Im Gegensatz zur Verbindungseinheit **73** ist jedoch die Verbindungseinheit **86** auf ihrer der Klinkeinheit **87** abgewandten Seite geschlossen. Der bzw. die Bogendrähte können jetzt in die Einlegausnehmungen, welche als Längsbohrungen **89a** und **89b** ausgebildet sind, nicht mehr eingedrückt werden, sie müssen eingeschoben werden. Lediglich der Anschauung wegen sind hier zwei im Querschnitt unterschiedliche Längsbohrungen **89a** und **89b** gezeigt. Im Gegensatz zur Verbindungseinheit **73** hat die Verbindungseinheit **86** an ihrer äusseren Längsseite je einen Knopf **90** zur Befestigung einer Ligatur, eines Gummibandes etc..

Beim Kauen können bei an einem Zahn befestigten Schloss grosse Kräfte auf die Verbindungseinheit wirken. Damit hierdurch die Verbindungseinheit **86** nicht aus ihrer eingeklinkten Verbindung mit der Basisplatte befreit wird, wird in einen ein Klinkelementpaar **91a** und **91b** trennenden Längsschlitz **93** ein Keil **94** eingedrückt. Ein derartiger Keil kann auch in den Längsschlitz **75** der Verbindungseinheit **73** eingedrückt werden.

Um eine gute Federwirkung des Klinkelementpaares **91a** und **91b** zu erreichen geht der Längsschlitz **93** in einen Längsschlitz **95** mit zusammenlaufenden Wänden über.

Die in **Figur 12** dargestellte Basisplatte **101** ist als Platte mit einem auslaufenden, umlaufenden Rand **102** ausgebildet, damit ein gutes Anschmiegen an die Zahnoberfläche **103** gegeben ist. In einer Abstandswölbung **105**, deren mittlerer Bereich **106** eben ausgebildet ist, ist eine Einklinkausnehmung **107** angeordnet. Die Einklinkausnehmung **107,** kann wie in **Figur 12** gezeigt, eine Ausfräsung sein, deren Fräsrand **109** eine längsverlaufende Nase **110** hat, die in ihrer Form der Form der Rille **78a/b** der in **Figur 10** dargestellten Verbindungseinheit **73** angepasst ist (für die Klinkeinheit **87** der in **Figur 11** gezeigten Verbindungseinheit **86** gilt Analoges).

Soll eine Basisplatte auf einem in **Figur 8** dargestellten Zahnband **13** angebracht werden, kann beispielsweise ein in **Figur 13** gezeigte Basisplatte **115** verwendet werden. Die Basisplatte **115** ist vereinfacht ausgedrückt "schneeschuhartig" mit einem nach unten gebogenen vorderen und hinteren Auflageteil **116** und **117** ausgebildet, wobei der vorderer und der hinterer Auflageteil **116** und **117** über eine Abstandswölbung **119,** welche auch hier einen ebenen Mittelteil **120** hat, verbunden sind. Durch die Abstandswölbung **119** ergibt sich bei auf der Zahnseite montierter Basisplatte **115** ein Freiraum **118** analog zum Freiraum **22** bzw. **60**. Die Basisplatte **115** kann aus einem Blechstück gebogen sein. Der Mittelteil **120** weist einen Durchbruch **121** als Einklinkausnehmung auf. Am Übergang von Mittelteil **120** zum vorderen bzw. hinteren Auflageteil **116** und **117** ist jeweils eine Schlaufe **123a** und **123b** angeordnet, an der eine Ligatur oder ähnliches angebracht werden kann. Die Basisplatte **115** ist zwar bevorzugt zur Befestigung auf einem Zahnband vorgesehen, kann aber auch direkt auf der Zahnoberfläche angeordnet werden.

Eine weitere Variante eines Schlosses **127** mit einer im Querschnitt dargestellten Verbindungseinheit **129** und einer auf einer Zahnseitenoberfläche **130** angeordneten Basisplatte **131** ist in **Figur 14** dargestellt. Die Basisplatte **131,** welche der in **Figur 12** dargestellten Basisplatte **101** entspricht, ist mit einem Zementbett **132** an der Zahnseitenoberfläche **130** befestigt. Die Verbindungseinheit **129** hat eine Klinkeinheit **133**, die den Klinkeinheiten **74** und **87** der Verbindungseinheiten **73** und **86** entspricht. Im Gegensatz zu den bisher erläuterten Verbindungseinheiten **17, 52, 73** und **86** hat die Verbindungseinheit **129** für zwei Bogendrähte **135a** und **135b** zwei Einlegausnehmungen, welche als Einlegrillen **136a** und **136b** ausgebildet sind, die im montierten Zustand am Zahn ein Einpressen bzw. Einlegen des betreffenden Bogendrahtes **135a** bzw. **135b** von oben bzw. von unten gestatten. Die Einlegrillen **136a** und 136b sind seitlich offen. Um eine gute Halterung der Verbindungseinheit **129** in der Basisplatte **131** zu erreichen, wird auch hier analog zur Darstellung in **Figur 11** ein Keil **137** verwendet. Als Keil **137** kann auch eine Ligatur verwendet werden.

Die beiden Bogendrähte **135a/b** und die dazu gehörenden Rillen **136a/b** sind in **Figur 14** rechteckig ausgebildet. Eine rechteckige Ausbildung garantiert einen guten Presssitz; es kann aber auch ein runder Bogendraht verwendet werden, der in eine Rille mit einem leicht überlappenden halbrunden Querschnitt einschnappbar ist.

Wie bereits oben ausgeführt, können beim Kauen auf ein am Zahn befestigtes Schloss grosse Kräfte wirken. Damit eine Verbindungseinheit hierdurch nicht aus ihrer eingeklinkten Verbindung mit der Basisplatte befreit wird, wurde oben vorgeschlagen das Klinkelementpaar mit einem in dessen Längsschlitz eingetriebenen Keil zu sichern. Anstatt einen Keil einzutreiben, kann, wie in **Figur 15** dargestellt, an einer Verbindungseinheit, hier mit **141** bezeichnet, eine nach unten vorstehende Längsnase **143** angeordent werden, welche in eine entsprechende längsverlaufende Ausnehmung bzw. in den Durchbruch **121** in der Basisplatte **115** eingreift. Die Verbindungseinheit **141** ist dreiteilig mit einem Grundkörper **145**, einer Haltekappe **146** und einer Abdeckung **147** aufgebaut. Die Verbindungseinheit 141 könnte auch einteilig aufgebaut werden, der bzw. die Bögendrähte müssten dann in entsprechende Einlegausnehmungen eingefädelt werden.

Der Grundkörper **145** ist im Querschnitt analog zu einem "Dreizack" mit stark verkürztem Haltestiel ausgebildet. Der im Querschnitt stark verkürzte Haltestiel ist die Längsnase **143**. Um eine weitere Darstellung einzusparen, ist eine in **Figur 15** linke Einlegausnehmung **149** für einen runden Bogendraht im Querschnitt U-förmig und die andere, rechte Einlegausnehmung **150** für einen viereckigen Bogendraht viereckig ausgebildet dargestellt. Die Haltekappe **146** ist rechteckig U-förmig ausgebildet, wobei der U-Boden **151** die Einlegausnehmungen **149** und **150** abdeckt. An den äusseren Enden der U-Schenkel **153a** und **153b** sind nach innen gewölbte Einklinkelemente **155a** und **155b** angeformt, welche in seitliche Ausnehmungen **156a** und **156b** der Basisplatte **115** eingreifen. Die Halteklappe **146** ist aus einem federnden Material (Federstahl) hergestellt.

Zur Montage auf der Basisplatte **115** wird der Grundkörper **145** derart auf die Basisplatte **115** aufgesetzt, dass die Längsnase **143** im Durchbruch **121** zu liegen kommt. Als nächstes werden der bzw. die Bogendrähte in die Einlegausnehmungen **149** und/oder **150** eingelegt und falls notwendig fixiert. Anschliessend wird die Haltekappe **146** derart übergestülpt, dass die Einklinkelemente **155a** und **155b** in die seitlichen Ausnehmungen **156a** und **156b** einklinken. Zum Abschluss wird dann auf die Aussenseite des U-Bodens **151** die Abdeckung **147** aufgesetzt. Die Abdeckung **147** kann federnd ausgebildet werden; sie ist dann ebenfalls einklinkbar. Bevorzugt wird man sie aber zusätzlich festkleben, zementieren oder auf irgend eine andere Art und Weise fest mit der Haltekappe **146** verbinden. Die Abdeckung hat hauptsächliche eine ästhetische Wirkung; mit ihr kann z.B. eine Anpassung an die Zahnfarbe vorgenommen werden.

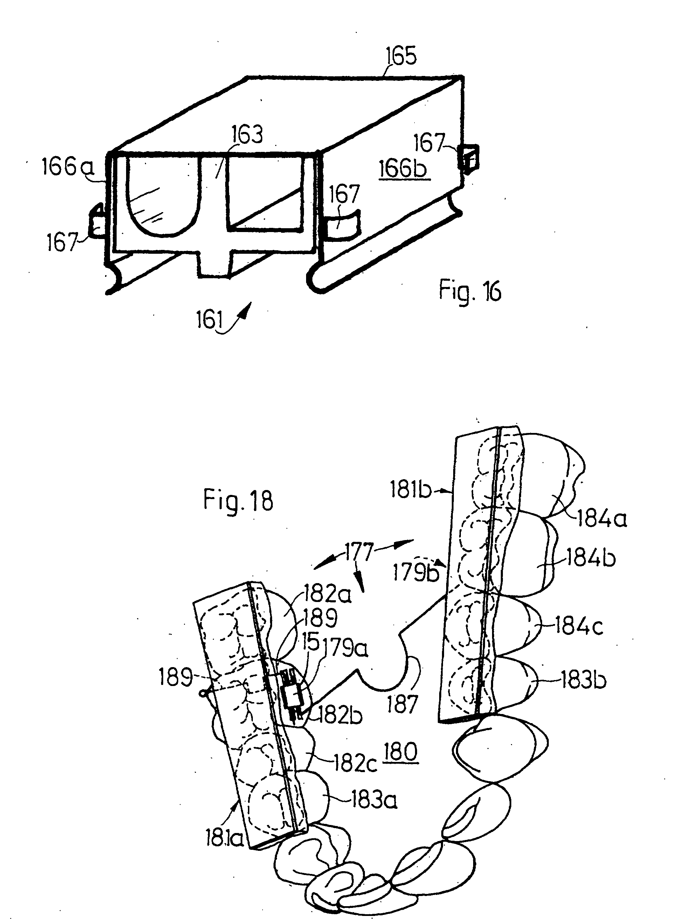

In **Figur 16** ist eine Verbindungseinheit **161** als Variante zu der in **Figur 15** dargestellten Verbindungseinheit **141** gezeigt. Die Verbindungseinheit **161** hat einen Grundkörper **163**, der identisch mit dem Grundkörper **145** ist. Die Verbindungseinheit **161** hat eine Haltekappe **165,** an deren U-Schenkeln **166a** und **166b** Haken **167** zum Befestigen einer Ligatur, eines Gummibandes, ...angeordnet sind. Anstelle der Haken **167** können auch die in **Figur 10** gezeigten Haken **83** oder der in **Figur 11** gezeigte Knopf **90** angeordnet werden.

In **Figur 17** ist eine Draufsicht auf einen Unterkiefer mit einer kieferorthopädischen Anordnung **170** zu sehen, welche zur Korrektur der unteren Schneidezähne **172** einen sogenannten Aufbiss **171** hat. Der Aufbiss **171** ist an den Schneidezähnen (Incisivi) **172** zungenseitig angeordnet. An jeweils einem der Molaren (Backenzähne) **173a** und **173b** sind zungenseitig (lingual) je ein Schloss **175** angeordnet (z.B. aufgeklebt). Als Schloss **175** kann eine der oben beschriebenen Ausführvarianten **7a-d, 50** oder **127** bzw. die oben beschriebene Kombination aus Basisplatte **101** bzw. **115** sowie Verbindungseinheit **73, 86, 141** oder **161**verwendet werden. Ein Bogendraht **176** ist im Aufbiss **171** und seine Enden in einer Einlegausnehmung einer Verbindungseinheit des Schlosses **175** gehalten. Der Aufbiss **171** ist bevorzugt ein Halbfabrikat mit einer Tragschicht und einer durch Druck verformbaren Schicht. Die Tragschicht besteht vorzugsweise aus einem harten Kunststoff, auf dem an der den Zähnen zugeordneten Seite die durch Druck verformbare Schicht aufgebracht ist. Der Aufbiss **171** wird im Mund des Patienten angepasst und anschliessend, beispielsweise durch Lichtpolymerisation, gehärtet. Der Bogendraht **176** liegt in einer Bohrung der Tragschicht. Mit dem Bogendraht **176** wird der Aufbiss **171** in der für die Zahnkorrektur gewünschten Position gehalten. Infolge des einfachen Einlegens des Bogendrahtes **176** in die Einlegeausnehmung und des einfachen Einklinkens des betreffenden Verbindugslements in jeweils eine Basisplatte ist ein gutes Arbeiten bei der Vornahme einer Zahnkorrektur gegeben.

Ein weiteres Beispiel für eine kieferorthopädische Anordnung **177** zeigt **Figur 18**, wobei hier ein Einsatz von jeweils zwei Bogendrahtenden in einem Schloss, hier den beiden Schlössern **197a** und **179b**, dargestellt ist. Aufgrund der perspektivischen Darstellung ist lediglich das Schloss **179a** sichtbar. **Figur 18** zeigt eine perspektivische Draufsicht auf einen Oberkiefer **180** mit zwei okklusal angeordneten Aufbissen **181a** und **181b** auf den Molaren und den hintersten Prämolaren. Der Aufbiss **181a** ist auf den Molaren **182a** bis **182c** sowie auf einem Prämolar **183** angeordnet. Der Aufbiss **181b** liegt auf den Molaren **184a** bis **184c** und einem Prämolar **183b**. Am Molaren **182b** ist palatinal das Schloss **179a** (ausgebildet analog zu den oben angeführten Varianten) angeordnet. Am Molar **184b** ist ein analoges in der Darstellung nicht sichtbares Schloss **179b** angeordnet. Zwischen den beiden Schlössern verläuft ein Bogendraht als sogenannter Palatinalbogen **187.** Von jedem Schloss verläuft ein weiterer Bogendraht zum Aufbiss **181a** bzw. **181b.**

## Patentansprüche

1. Kieferorthopädische Apparatur **(1; 170; 177)** zur Zahnstellungskorrektur von Zähnen **(6a, 6b; 172; 183a/b, 182a-c, 184a-c)** mit wenigstens einem Bogendraht **(5a, 5b; 176; 187, 189)** als Führungselement und mit wenigstens zwei Schlössern [Brackets] **(7a-d; 50; 127; 175; 179a/b),** wobei jedes Schloss **(7a-d; 50; 127; 175; 179a/b)** eine Verbindungseinheit **(17; 52; 73; 86; 141; 161)** für einen Verbund mit dem wenigstens einen Bogendraht **(5a, 5b; 176; 187, 189)** hat und ferner jedes Schloss **(7a-d; 50; 127; 175; 179a/b)** lediglich eine Basiseinheit **(15; 51; 101; 115; 131)** hat, welche auf einer Zahnseitenfläche **(25; 103; 130)** wenigstens einem der Zähne **(6a, 6b; 172; 183a/b, 182a-c, 184a-c)** bzw. auf wenigstens einem auf einem der Zähne angeordneten Zahnband **(13)** fixierbar ist, **dadurch gekennzeichnet, dass** jede Basiseinheit lediglich als Basisplatte **(15; 51; 101; 115; 131)** ausgebildet ist und jede Verbindungseinheit **(17; 52; 73; 86; 141; 161)** eine in die Basisplatte **(15; 51; 101; 115; 131)** einklinkbare Klinkeinheit **(19; 55a/b; 74; 87; 133; 155a/b)** hat, welche aus dem eingeklinkten Zustand wieder ausklinkbar ist, wobei die Klinkeinheit **(19; 55a/b; 74; 87; 133; 155a/b)** derart ausgebildet ist, dass der Einklinkvorgang mit einer annähernd senkrecht zur Basisplattenoberseite d.h. senkrecht zur die Basisplatte tragenden Zahnseite, aufbringbaren Kraft **(K)** vornehmbar ist

2. Schloss [Bracket] **(7a-d; 50; 127; 175; 179a/b)** für eine kieferorthopädische Apparatur **(1; 170; 177)** nach Anspruch 1 zur Zahnstellungskorrektur von Zähnen **(6a, 6b; 172; 183a/b, 182a-c, 184a-c)** unter Verwendung wenigstens eines Bogendrahts **(5a, 5b; 176; 187, 189)** als Führungselement, wobei jedes Schloss **(7a-d; 50; 127; 175; 179a/b)** mit wenigstens einem Bogendraht **(5a, 5b; 176; 187, 189)** verbindbar ist und lediglich eine auf einer Zahnseitenfläche **(25; 103; 130)** wenigstens einem der Zähne **(6a, 6b; 172; 183a/b, 182a-c, 184a-c)** bzw. auf wenigstens einem auf einem der Zähne angeordneten Zahnband **(13)** fixierbare Basiseinheit **(15; 51; 101; 115; 131)** hat, **dadurch gekennzeichnet, dass** jede Basiseinheit lediglich als Basisplatte **(15; 51; 101; 115; 131)** ausgebildet ist, jede Verbindungseinheit **(17; 52; 73; 86; 141; 161)** eine in die Basisplatte **(15; 51; 101; 115; 131)** einklinkbare Klinkeinheit **(19; 55a/b; 74; 87; 133; 155a/b)** hat, welche aus dem eingeklinkten Zustand wieder ausklinkbar ist, wobei die Klinkeinheit **(19; 55a/b; 74; 87; 133; 155a/b)** derart ausgebildet ist, dass der Einklinkvorgang mit einer annähernd senkrecht zur Basisplattenoberseite d.h. senkrecht zur die Basisplatte tragenden Zahnseite, aufbringbaren Kraft (K) vornehmbar ist.

3. Schloss **(7a-d; 50; 127; 175; 179a/b)** nach Anspruch 2, **dadurch gekennzeichnet, dass** die Basisplatte **(15; 51; 101; 115; 131)** wenigstens eine Auflagefläche **(21a/b; 116, 117)** für eine Fixierung an der betreffenden Zahnseitenfläche **(25; 103; 130)** bzw. am zum Zahn gehörenden Zahnband **(13)** und wenigstens eine Abstandswölbung **(23; 119)** hat, welche vorzugsweise bei auf der Zahnseitenfläche **(25; 103; 130)** bzw. auf dem Zahnband **(13)** befestigter Basisplatte einen Freiraum **(22; 60; 118)** zur Zahnseitenfläche **(25; 103; 130)** bzw. zur Aussenseite des Zahnbandes **(13)** freilässt.

4. Schloss **(7a-d; 50; 127; 175; 179a/b)** nach Anspruch 3, **dadurch gekennzeichnet, dass** die Basisplatte **(15; 51; 101; 115; 131)** im Bereich der Abstandswölbung **(23; 119)** wenigstens eine Einklinkkante **(29a/b; 53a/b; 107; 121, 156a/b)** hat, zu der die Klinkeinheit **(19; 55a-d; 74; 87; 155a/b)** passend ausgebildet ist, so dass Klinkeinheit **(19; 55a-d; 74; 87; 155a/b)** und Einklinkkante **(29a/b; 53a/b; 107; 121, 156a/b)** als wieder lösbare Verbindung für die Verbindungseinheit **(17; 52; 73; 86; 141; 161)** und die Basisplatte **(15; 51; 101; 115; 131)** dienen.

5. Schloss **(7a-d; 50; 127; 175; 179a/b)** nach Anspruch 4, **gekennzeichnet durch** wenigstens eine Fixierungsausnehmung **(121)** in der Basisplatte **(115)** und wenigstens einen an der Verbindungseinheit **(141; 161)** angeordneten Ansatz **(143),** dessen Querschnitt derart gewählt ist, dass der Ansatz **(143)** mit einer Spielpassung in die Ausnehmung **(121)** einbringbar ist, wobei die Spielpassung allerdings derart eng bemessen ist, dass ein Ausklinken zwischen der Klinkeinheit **(155a/b)** und der betreffenden Einklinkkante **(156a/b)** nicht erfolgt.

6. Schloss **(7a-d; 50; 127; 175; 179a/b)** nach einem der Ansprüche 2 bis 5, **dadurch gekennzeichnet, dass** die Verbindungseinheit **(17; 52; 73; 86; 141; 161)** wenigstens eine Einlegausnehmung **(37a-d; 57a/b; 79a/b; 89a/b149,150)** hat, in den der Bogendraht **(5a/b; 176; 187, 189)** bzw. einer der Bogendrähte **(5a/b; 176; 187, 189)** einlegbar ist und vorzugsweise die Klinkeinheit **(19; 55a-d; 74; 87)** und ein Grundkörper der Verbindungseinheit **(17; 52; 73; 86)** ein einziges zusammenhängendes, nicht auftrennbares Teil **(17; 52; 73; 86)** bildet.

7. Schloss **(7a-d)** nach Anspruch 5 und 6, **gekennzeichnet durch** wenigstens einen zweiten Schlitz **(41a-d),** der mit dem ersten Schlitz **(33a/b)** und je einer Einlegausnehmung **(37a-d)** der Verbindungseinheit **(17)** verbunden ist, damit die Federwirkung dazu verwendbar ist, den in der Einlegausnehmung **(37a-d)** steckenden Bogendraht **(5a, 5b)** zu klemmen und vorzugsweise die Verbindungseinheit **(17)** U-förmig ausgebildet ist, jede Klinkeinheit **(19)** Teil eines U-Schenkels **(38a/b)** ist, jeder Durchbruch je eine Öffnung **(37a-d)** als Einlegausnehmung in einem der Schenkel **(38a/b)** hat und vorzugsweise im U-Boden **(39)** in unmittelbarer Nachbarschaft der Öffnungen **(37a-d)** Eingriffsdurchbrüche **(43a-d)** vorhanden sind, **durch** die hindurch der Bogendraht **(5a, 5b)** beim Klemmen fixierbar ist.

8. Schloss **(7a-d; 50)** nach einem der Ansprüche 2 bis 7, **dadurch gekennzeichnet, dass** die Verbindungseinheit **(52)** an zwei gegenüberliegenden Seiten wenigstens je eine vorstehende Lasche **(59a/b)** hat, an der der Bogendraht **(5a/b)** direkt befestigbar oder der Bogendraht **(5a/b)** mit einem Gummiband oder einem Ligaturendraht befestigbar ist.

9. Schloss **(7a-d; 50)** nach einem der Ansprüche 2 bis 8, **dadurch gekennzeichnet, dass** die Verbindungseinheit **(52)** bis auf ihre Durchbrüche **57a/b)** für jeden Bogendraht **(5a/b)** und die Klinkeinheit **(55a-d)** zum Ein- bzw. Ausklinken in der Basisplatte (51) vergossen sind.

10. Schloss nach einem der Ansprüche 2 bis 9, **gekennzeichnet durch** eine zwischen Verbindungseinheit **(141, 161)** und Basisplatte **(115)** vorhandene Steckverbindung **(143, 121),** welche eine seitliche Auslenkung der Verbindungseinheit **(141, 161)** aus der Basisplatte **(115)** verhindert, damit ein Ausklinken der Klinkverbindung **(155a/b, 155a/b) durch** die Kaukraft im Mund eines die Anordnung tragenden Patienten verhindert wird.
